# EUROPÄISCHE PATENTSCHRIFT

(11) **EP 2 558 291 B1**
(45) Veröffentlichungstag und Bekanntmachung des Hinweises auf die Patenterteilung: **27.08.2014**
(21) Anmeldenummer: 11712580.7
(22) Anmeldetag: 07.04.2011
(51) Int. Cl.: B32B 5/22, B32B 9/02, B32B 9/04, B60R 13/01, B60R 13/02, B60R 13/08

(54) **FASERVERBUNDWERKSTOFFE, INSBESONDERE FÜR DACHHIMMELKONSTRUKTIONEN**
FIBRE COMPOSITE MATERIALS, IN PARTICULAR FOR ROOF LINER STRUCTURES
MATÉRIAUX COMPOSITES RENFORCÉS PAR DES FIBRES, EN PARTICULIER POUR STRUCTURES D'HABILLAGE DE PLAFOND

(30) Priorität: 12.04.2010 EP 10159580
(43) Veröffentlichungstag der Anmeldung: 20.02.2013
(73) Patentinhaber: BASF SE, 67056 Ludwigshafen (DE)
(72) Erfinder: KALBE, Michael, 69469 Weinheim (DE)
(86) Internationale Anmeldenummer: PCT/EP2011/055421
(87) Internationale Veröffentlichungsnummer: WO 2011/128244

(56) Entgegenhaltungen:
- EP-A2- 0 992 340
- WO-A1-2010/146355
- DE-A1- 10 022 902
- DE-B3- 10 318 136
- DE-U1- 9 418 236
- DE-U1- 29 900 621

## Beschreibung

Die Erfindung betrifft Faserverbundwerkstoffe, umfassend zwei Faserverbundschichten und eine dazwischen liegende Korkschicht, und deren Verwendung als Formteile, beispielsweise für den Kraftfahrzeug-Innenraum, insbesondere für Dachhimmelkonstruktionen.

Großflächige Innenausbauteile für Kraftfahrzeuge wie Dachhimmel werden bisher überwiegend aus duroplastischen Polyurethan-Glasfaserverbunden gefertigt. Solche Verbundmaterialien werden aus einem Polyurethan-Hartschaum, der mit einem Polyurethan-Klebstoff auf Basis von Diphenylmethandiisocyanat (PMDI) imprägniert ist, und beidseitig darauf aufgebrachten Glasfaservliesen durch Verformen und Polymerisation in einer Heißpresse hergestellt. Nicht unproblematisch sind die dabei verwendeten Materialien. So sind beim Umgang mit PMDI strenge Arbeitsschutzmaßnahmen vorzusehen und einzuhalten. Bauteile auf Basis von Polyurethanschäumen sind praktisch nicht rezyklierbar. Auch die Verwendung von Glasfasern erfordert wegen der Gefahr des Glasfaserflugs und von Hautreizungen besondere Maßnahmen der Arbeitsplatzhygiene. Die thermische Verwertung von glasfaserhaltigen Materialien bringt Probleme durch Rückstände aus Glasschlacke.

Somit besteht ein Bedarf an alternativen Werkstoffen für großflächige Kfz-Formteile. Aufgabe der Erfindung ist es, solche Werkstoffe bereitzustellen. Die Materialien sollten unter dem Gesichtspunkt der Arbeitshygiene unbedenklich sein und recyclingfähig sein.

Gelöst wird die Aufgabe durch einen Faserverbundwerkstoff unfassend in der Abfolge (i) - (iii)
(i) eine erste Faserverbundschicht;
(ii) eine Korkschicht mit einer Dichte von < 200 kg/m³;
(iii) eine zweite Faserverbundschicht.

Als äußere Schichten umfasst der Faserverbundwerkstoff zwei Faserverbundschich-ten. Die Faserverbundschichten können als Fasern ausschließlich synthetische Fasern enthalten. Bevorzugt enthalten die Faserverbundschichten Naturfasern. Beispiele für Naturfasern, die in den Faserverbundschichten enthalten sein können, sind Fasern von Baumwolle, Sisal, Flachs, Hanf, Ölleinen und Jute.

Die Faserverbundschichten (i) und (iii) liegen ganz allgemein in Form eines textilen Flächengebildes vor. Besonders geeignet sind Vliese (Stapelfasern oder Spinvliese), aber auch Gewebe und Gewirke sind möglich. Bevorzugt sind Vliese aus Naturfasern, beispielsweise Vliese aus Baumwolle und Sisal. Diese kommen in ihren Eigenschaften Glasfaservliesen nahe.

Die Naturfasern können im Gemisch mit synthetischen Fasern vorliegen, beispielsweise im Gemisch mit Fasern aus Polypropylen, Polyethylen, Polyester, Polyamid oder Polyacrylnitril. Der Anteil an Kunststoffasern kann bis zu 50 Gew.% betragen, bevorzugt beträgt er bis zu 30 Gew.% und besonders bevorzugt bis zu 10 Gew.-%. In einer insbesondere bevorzugten Ausführungsform liegen keine synthetischen Fasern neben den Naturfasern vor.

In einer weiteren Ausführungsform der Erfindung enthalten die Faserverbundschichten ausschließlich synthetische Fasern, beispielsweise die oben genannten synthetischen Fasern, oder Polyesterfasern aus PET oder PBT.

Die Vliese können mechanisch, thermisch oder chemisch vorgebunden sein. Thermisch vorgebundene Vliese können beispielsweise durch Mitverwendung synthetischer Bindefasern und thermischer Behandlung in einem Kalander erhalten werden.

Die Vliese, Gewebe und Gewirke werden bevorzugt mit einem thermovernetzbaren Bindemittel imprägniert. Geeignete thermovernetzbare Bindemittel sind Bindemittel auf Basis vernetzbarer Polyacrylsäuren, Acrylsäure/Maleinsäure-Copolymere, Formaldehydharze, wie Harnstoff-Formaldehydharze (UF-Harze), Phenol-Formaldehydharze (PF-Harze), Melamin-Formaldehydharze (MF-Harze) und Melamin-Harnstoff-Formaldehydharze (MUF-Harze), weiterhin vernetzbare wässrige Dispersionen, wie vernetzbare Styrol-Butadien-Dispersionen, Styrol-Acrylat-Dispersionen und reine Acrylat-Dispersionen. Möglich sind auch Kombinationen aus Formaldehydharzen und wässrigen Dispersionen.

In einer Ausführungsform der Erfindung werden thermovernetzbare Bindemittel auf Basis von Acrylsäure/Maleinsäure-Copolymere und Triethanolamin als Vernetzer, wie sie beispielsweise in EP 0 882 093 B1 beschrieben sind, als Bindemittel für die Vliese, Gewebe und Gewirke verwendet.

Das Flächengewicht der Faserverbundschichten beträgt im Allgemeinen ≤ 400 g/m², bevorzugt < 200 g/m² und besonders bevorzugt < 150 g/m². Für Autodachhimmel beträgt es insbesondere 100 bis 150 g/m².

Als mittlere Schicht umfasst der Faserverbundwerkstoff eine Korkschicht (ii). Die Korkschicht besteht aus mittels eines Binders gebundenen Korkagglomeraten und kann aus Granulat unterschiedlicher Teilchengröße gebildet werden. Durch die Wahl bestimmter Kornfraktionen (Teilchengrößen) kann die Dichte der Korkschicht gezielt eingestellt werden. Es werden Korkschichten mit einer Dichte von < 200 kg/m³ verwendet. Die Dicke der Korkschicht beträgt im Allgemeinen 4 - 6 mm, das Flächengewicht der Korkschicht beträgt im Allgemeinen < 500 g/m². Für Autodachhimmel sollte sich mit den beiden Naturfaserverbundschichten (i) und (iii) ein Flächengewicht des gesamten Schichtverbundes von < 800 g/m² ergeben.

Die Korkschicht wird mit geeigneten thermoplastisch oder duroplastisch aushärtbaren Bindemitteln vorgebunden und vorzugsweise in nicht ausgehärteter Form eingesetzt. Dadurch weist die Korkschicht eine hohe Flexibilität auf und kann leicht verformt werden. Bevorzugt sind die oben genannten thermovernetzbaren Bindemittel auf Basis von vernetzbaren Acrylaten, Acrylat-haltigen Copolymeren, vernetzbaren wässrigen Dispersionen sowie Polyurethansysteme, wie sie auch zur Imprägnierung der Naturfaserverbundschichten verwendet werden.

Die erfindungsgemäßen Faserverbundwerkstoffe werden durch thermisches Verformen des Schichtverbundes und Thermovernetzung des Binders hergestellt. Ein thermovernetzbares Bindemittel liegt zumindest in den Faserverbundschichten vor. Dazu werden die erste Faserverbundschicht, die Korkschicht und die zweite Faserverbundschicht im nicht ausgehärteten Zustand aufeinander gelegt und in einer Heißpresse in die gewünschte dreidimensionale Form gebracht und anschließend thermovernetzt. Das Aushärten von Faserverbundschichten und Korkschicht erfolgt dabei in der Heißpresse.

Je nach Konstruktion (Vliesgewichte, Korkdichte, Binderanteil) können die mechanischen Eigenschaften in weiten Grenzen variiert und den Anforderungen angepasst werden.

Damit erfüllt der erfindungsgemäße Faserverbundwerkstoff die einschlägigen Spezifikationen.

Die Faserverbundwerkstoffe sind gut recyclingfähig. Beim thermischen Recycling fällt keine Glasschlacke an.

Die erfindungsgemäßen Faserverbundwerkstoffe sind zur Herstellung von großflächigen Formteilen für den Innenausbau von Kraftfahrzeugen (Kraftfahrzeug-Innenraumteile) geeignet. Beispiele sind Dachhimmel, Hutablagen und Kofferraumverkleidungen. Die Faserverbundwerkstoffe können auch zur Herstellung von Möbeln, beispielsweise Schulmöbeln, eingesetzt werden. Allgemein können sie zur Herstellung von Formteilen verwendet werden, deren Formgebung in einer Heißpresse erfolgt. Eine bevorzugte Anwendung ist die Verwendung der Faserverbundwerkstoffe, vorzugsweise der Naturfaserverbundwerkstoffe umfassend Faserverbundschichten aus Naturfasern, zur Herstellung von Dachhimmeln.

Die Erfindung wird durch das nachstehende Beispiel näher erläutert:

### Beispiel

Ein Faserverbundwerkstoff bestehend aus einem mit Acrodur gebundenen Korkträger, der beidseitig mit einem ebenfalls mit Acrodur gebundenen Vlies gestärkt ist, wird wie folgt hergestellt:

### 1. Herstellung des Korkträgers

In einem Gefäß werden 206 g Kork mit der üblichen Feuchte von 3% vorgelegt. Dazu werden unter Rühren 16 g eines thermisch härtbaren, Phenol- und Formaldehyd-freien reaktiven Acrylatharzes (Acrodur) mit einem Feststoffgehalt von 50% innerhalb 2 Minuten zugegeben. Das so eingestellte Verhältnis Kork zu Bindemittel beträgt 100 zu 4 (bezogen auf die trockenen Komponenten). Die Feuchte von Kork/Acrodurmischung liegt bei 6,4%.

Eine quadratische Metallform im Format 15 x 15 cm, einer Höhe von 10 cm und einem Volumen von 2250 cm³ wird in einer beheizbaren Presse innerhalb 10 Minuten auf 130° C erhitzt. In die so vorgeheizte Form werden 216 g Kork-Bindermischung eingewogen. Die Form wird mit einem 7 cm dicken gelochten Deckel so verschlossen, dass der Inhalt auf eine Dicke von 3 cm komprimiert wird. Durch das vorgegebene Volumen stellt sich die gewünschte Dichte von 0,24 g/cm³ ein. Die Verweilzeit in der 130° C heißen Presse beträgt 60 Minuten. Nach Ablauf der Presszeit wird die Korkplatte aus der Form entnommen. Die für den Dachhimmel benötigten 4 mm dicken Korkträger werden anschließend aus dem Block ausgesägt.

### 2. Imprägnieren des Baumwolle/Sisal-Deckvlieses

Das Vlies mit einem Flächengewicht von 100 g/m² wird mit Acrodur 950 L imprägniert. Dazu wird das Acrodur mit Wasser auf 40% verdünnt und anschließend durch Einrühren von Luft eine Dichte von 450 g/cm³ eingestellt. Die Imprägnierung des Vlieses mit dem Schaum erfolgt unter Standardbedingungen mit einem Laborfoulard. Die eingestellte Bindermenge liegt bei 100 g/m². Nach dem Imprägnieren werden die Vliese im Trockenschrank auf die Restfeuchte von 18% bei 70° C getrocknet.

### 3. Herstellung der Dachhimmelbauteile

Eine ausgesägte Korkscheibe im Format 30 x 30 cm wird beidseitig mit jeweils einem mit Acrodur gebundenen Vlies in der Presse bei 200° C innerhalb 60 Sekunden auf eine Dicke von 4 mm verpresst. Nach Ablauf der Presszeit kann ein formstabiles Bauteil entnommen werden. Die Dichte beträgt 0,24 g/cm³ bei einem Flächengewicht von etwa 1000 g/m².

Der so erhaltene Faserverbundwerkstoff wird einer mechanischen Prüfung unterworfen. Die Ergebnisse sind in der nachstehenden Tabelle zusammengefasst:

| | | | |
|---|---|---|---|
| Schlagzähigkeit ISO 179-1/1fU | | kJ/m² | 5 |
| Standardabweichung | | kJ/m² | 1 |
| | | | |
| Biegeversuch ISO 178 | | | |
| Biegefestigkeit bei 23° C | | N/mm² | 4 |
| Standardabweichung | | N/mm² | 1 |
| E-Modul | | N/mm² | 438 |
| Standardabweichung | | N/mm² | 39 |

## Patentansprüche

1. Faserverbundwerkstoff in der Form von Kfz-Innenraumteilen umfassend in der Abfolge (i) - (iii)
(i) eine erste Faserverbundschicht;
(ii) eine Korkschicht mit einer Dichte von < 200 kg/m³;
(iii) eine zweite Faserverbundschicht;
erhältlich durch Aufeinanderlegen der ersten Faserverbundschicht umfassend einen thermovernetzbaren Binder, der Korkschicht umfassend einen thermovernetzbaren Binder und der zweiten Faserverbundschicht umfassend einen thermovernetzbaren Binder, jeweils im nicht ausgehärteten Zustand, Formgebung und Thermovernetzung in einer Heißpresse.

2. Faserverbundwerkstoff nach Anspruch 1, **dadurch gekennzeichnet, dass** die erste und die zweite Faserverbundschicht Naturfasern enthalten.

3. Faserverbundwerkstoff nach Anspruch 1 oder 2, **dadurch gekennzeichnet, dass** die erste und die zweite Faserverbundschicht Naturfasern, ausgewählt aus Fasern von Baumwolle, Sisal, Flachs, Hanf, Ölleinen, und Jute.

4. Faserverbundwerkstoff nach einem der Ansprüche 1 bis 3, **dadurch gekennzeichnet, dass** die erste und die zweite Faserverbundschicht ein Vlies, Gewebe oder Gewirke aus Naturfasern umfassen.

5. Faserverbundwerkstoff nach einem der Ansprüche 1 bis 4, **dadurch gekennzeichnet, dass** die erste und die zweite Faserverbundschicht im nicht ausgehärteten Zustand einen thermovernetzbaren Binder umfassen.

6. Faserverbundwerkstoff nach einem der Ansprüche 1 bis 5, **dadurch gekennzeichnet, dass** die Korkschicht im nicht ausgehärteten Zustand einen thermovernetzbaren Binder umfasst.

7. Verfahren zur Herstellung von Faserverbundwerkstoffen nach einem der Ansprüche 1 bis 6, bei dem die erste Faserverbundschicht, die Korkschicht und die zweite Faserverbundschicht im nicht ausgehärteten Zustand aufeinander gelegt und in einer Heißpresse in die gewünschte Form gebracht und thermovemetzt werden.

8. Verwendung von Faserverbundwerkstoffen nach einem der Ansprüche 1 bis 6 zur Herstellung von Dachhimmeln.

## Claims

1. A fiber composite material of construction in the form of automotive interior components, comprising in order (i) - (iii)
(i) a first fiber composite layer;
(ii) a cork layer having a density of < 200 kg/m³;
(iii) a second fiber composite layer;
obtainable by placing one on top of the other the first fiber composite layer comprising a thermally crosslinkable binder, the cork layer comprising a thermally crosslinkable binder, and the second fiber composite layer comprising a thermally crosslinkable binder, each in the uncured state, shaping, and thermally crosslinking in a hot press.

2. The fiber composite material of construction according to claim 1 wherein the first and second fiber composite layers comprise natural fibers.

3. The fiber composite material of construction according to claim 1 or 2 wherein the first and second fiber composite layers comprise natural fibers selected from fibers of cotton, sisal, flax, hemp, linseed fiber and jute.

4. The fiber composite material of construction according to any one of claims 1 to 3 wherein the first and second fiber composite layers comprise a nonwoven, woven or knit of natural fibers.

5. The fiber composite material of construction according to any one of claims 1 to 4 wherein the first and second fiber composite layers in the uncured state comprise a thermally crosslinkable binder.

6. The fiber composite material of construction according to any one of claims 1 to 5 wherein the cork layer in the uncured state comprises a thermally crosslinkable binder.

7. A process for producing fiber composite materials of construction according to any one of claims 1 to 6, wherein the first fiber composite layer, the cork layer and the second fiber composite layer are placed one on top of the other in the uncured state and are shaped as desired and thermally crosslinked in a hot press.

8. The use of fiber composite materials of construction according to any one of claims 1 to 6 in the manufacture of roof liners.

## Revendications

1. Matériau composite renforcé par des fibres sous la forme de parties d'habitacle de véhicule automobile, comprenant dans l'ordre (i) à (iii)
(i) une première couche composite renforcée par des fibres;
(ii) une couche de liège avec une densité < 200 kg/m³;
(iii) une deuxième couche composite renforcée par des fibres;
pouvant être obtenu par superposition de la première couche composite renforcée par des fibres comprenant un liant thermoréticulable, de la couche de liège comprenant un liant thermoréticulable et de la deuxième couche composite renforcée par des fibres comprenant un liant thermoréticulable, chacune à l'état non durci, mise à forme et thermoréticulation dans une presse à chaud.

2. Matériau composite renforcé par des fibres selon la revendication 1, **caractérisé en ce que** la première couche composite renforcée par des fibres et la deuxième couche composite renforcée par des fibres contiennent des fibres naturelles.

3. Matériau composite renforcé par des fibres selon la revendication 1 ou 2, **caractérisé en ce que** la première et la deuxième couches composites renforcées par des fibres contiennent des fibres naturelles, choisies parmi les fibres de coton, sisal, lin, chanvre, toile vernie, et jute.

4. Matériau composite renforcé par des fibres selon l'une quelconque des revendications 1 à 3, **caractérisé en ce que** la première et la deuxième couches composites renforcées par des fibres comprennent un non-tissé, un tissu ou un tricot en fibres naturelles.

5. Matériau composite renforcé par des fibres selon l'une quelconque des revendications 1 à 4, **caractérisé en ce que** la première et la deuxième couches composites renforcées par des fibres comprennent, à l'état non durci, un liant thermoréticulable.

6. Matériau composite renforcé par des fibres selon l'une quelconque des revendications 1 à 5, **caractérisé en ce que** la couche de liège comprend, à l'état non durci, un liant thermoréticulable.

7. Procédé de fabrication de matériaux composites renforcés par des fibres selon l'une quelconque des revendications 1 à 6, dans lequel on superpose, à l'état non durci, la première couche composite renforcée par des fibres, la couche de liège et la deuxième couche composite renforcée par des fibres et on leur donne la forme désirée et on assure leur thermoréticulation dans une presse à chaud.

8. Utilisation de matériaux composites renforcés par des fibres selon l'une quelconque des revendications 1 à 6 pour la fabrication d'habillages de plafond.
